# EUROPEAN PATENT SPECIFICATION

(11) **EP 2 262 169 B1**
(45) Date of publication and mention of the grant of the patent: **31.10.2018**
(21) Application number: 10160971.7
(22) Date of filing: 24.04.2010
(51) Int. Cl.: H04L 12/24, H04L 29/06, H04L 12/46

(54) **Automatic configuration of a terminal device by a router.**
Konfiguration eines Endgerätes durch einen Router.
Configuration automatique d'un dispositif de terminal par un routeur.

(30) Priority: 09.06.2009 US 455882
(43) Date of publication of application: 15.12.2010
(73) Proprietor: Sony Corporation, Tokyo 108-0075 (JP); Sony Electronics Inc., Park Ridge, NJ 07656 (US)
(72) Inventor: Sanchez, Jose, Temecula, CA 92592 (US); Desalvo, Tsui-Ping, Escondido, CA 92026 (US)
(74) Representative: D Young & Co LLP

(56) References cited:
- EP-A1- 1 093 054
- WO-A2-2005/107134
- US-A1- 2003 027 581
- US-A1- 2004 117 465
- US-A1- 2005 204 071

## Description

This invention relates generally to techniques for supporting network communications and relates more particularly to a system and method for effectively implementing an enhanced router device.

Implementing effective methods for supporting network communications is a significant consideration for designers and manufacturers of contemporary electronic systems. However, effectively supporting network communications may create substantial challenges for system designers. For example, enhanced demands for increased device functionality and performance may require more device processing power and require additional hardware resources. An increase in processing or hardware requirements may also result in a corresponding detrimental economic impact due to increased production costs and operational inefficiencies.

Furthermore, enhanced system capability to perform various advanced operations may provide additional benefits to a system user, but may also place increased demands on the control and management of various system components. For example, an enhanced electronic device that effectively supports Internet communications may benefit from an efficient implementation because of the large amount and complexity of the digital data involved.

Due to growing demands on system resources and substantially increasing data magnitudes, it is apparent that developing new techniques for supporting network communications is a matter of concern for related electronic technologies. Therefore, for all the foregoing reasons, developing effective systems for supporting network communications remains a significant consideration for designers, manufacturers, and users of contemporary electronic systems.

US 2004/0117465A describes a prior art system where a vendor provides configuration information for an electronic device connected to a network.

In accordance with embodiments of the present invention, a system and method are disclosed for effectively implementing an enhanced router device. In accordance with one embodiment of the present invention, an electronic network, such as the Internet, includes a plurality of distributed computer devices. A router device is coupled to the electronic network to support bi-directional communications between local electronic devices and the electronic network. In certain embodiments, a device support module of the router device advantageously cooperates with device managers of the electronic devices to automatically perform appropriate device configuration and management procedures.

In certain embodiments of the present invention, the router device is also implemented to also provide various types of enhanced functionalities for the benefit of device users. For
example, with sufficient on-board non-volatile memory, the router device is able to effectively support proxy services as well as web-caching for the attached electronic devices. In certain embodiments, the router device may also offer device users protection and intrusion detection notification regarding viruses and spam.

In addition, the ability to safely tunnel through the router device to local electronic devices from an authorized remote location may be supported using a virtual private network (VPN). In certain embodiments, local solid-state drive (SSD) storage may be utilized to store blacklists for use in blocking inappropriate data sources, as well as for supporting the web-caching of webpages accessed by the electronic devices.

By utilizing unique device identifiers of supported electronic devices and corresponding default device configurations and device management functions, the router device may cooperatively support the electronic devices in automatically performing appropriate configuration and management procedures with little or no user intervention. For at least the foregoing reasons, the present invention therefore provides an improved a system and method for effectively implementing an enhanced router device.

The scope of the invention is defined by the appended claims.

Embodiments of the invention will now be described with reference to the accompanying drawings, throughout which like parts are referred to by like references, and in which:
FIG. 1 is a block diagram of an electronic network, in accordance with one embodiment of the present invention;
FIG. 2 is a block diagram for one embodiment of a device of FIG. 1, in accordance with the present invention;
FIG. 3 is a block diagram for one embodiment of the device memory of FIG. 2, in accordance with the present invention;
FIG. 4 is a block diagram for one embodiment of the router of FIG. 1, in accordance with the present invention;
FIG. 5 is a block diagram for one embodiment of a router memory from FIG. 4, in accordance with the present invention;
FIG. 6 is a block diagram for one embodiment of router data from FIG. 5, in accordance with the present invention; and
FIG. 7 is a block diagram for one embodiment of the I/O interfaces from FIG. 4, in accordance with the present invention.

Embodiments of the present invention relate to an improvement in network communication techniques. The following description is presented to enable one of ordinary skill in the art to make and use the invention, and is provided in the context of a patent application and its requirements. Various modifications to the disclosed embodiments will be readily apparent to those skilled in the art, and the generic principles herein may be applied to other embodiments. Thus, the present invention is not intended to be limited to the embodiments shown, but is defined by the appended claims.

Embodiments of the present invention are described herein as a system and method for enhancing electronic network communications, and includes an electronic network that is configured to include a plurality of distributed computer devices. An enhanced router device is coupled to the electronic network to support bi-directional communications. At least one electronic device communicates with the electronic network through the router device. A device support module of the router device advantageously cooperates with a device manager of the electronic device to automatically perform appropriate device configuration and management procedures for the electronic device.

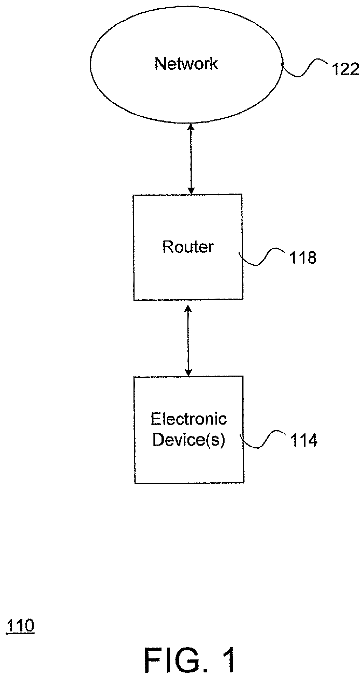

Referring now to FIG. 1, a block diagram of an electronic system 110 is shown, in accordance with one embodiment of the present invention. In the FIG. 1 embodiment, electronic system 110 may include, but is not limited to, one or more electronic devices 114, a router 118, and a network 122. In alternate embodiments, electronic system 110 may be implemented using various components and configurations in addition to, or instead of, certain of those components and configurations discussed in conjunction with the FIG. 1 embodiment.

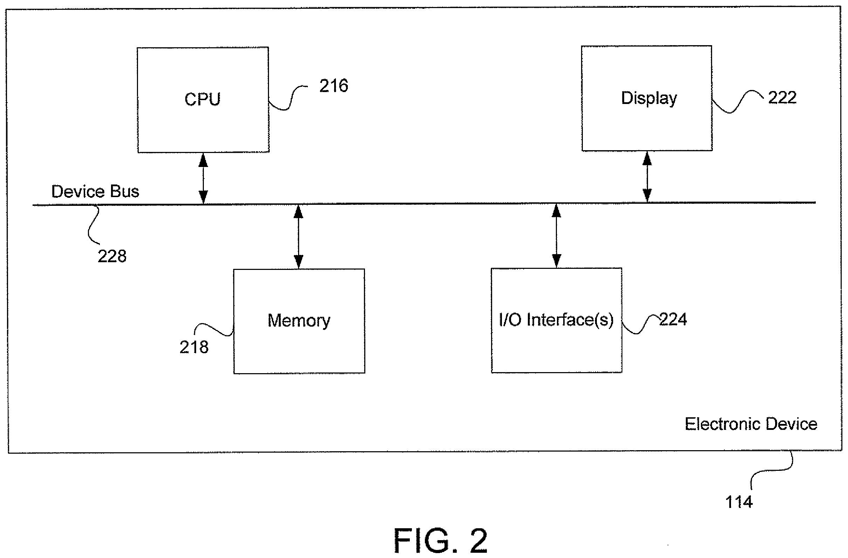

In the FIG. 1 embodiment, devices 114 may be implemented as any type of electronic device or other entity that is configured to allow device users to communicate through router 118 with other remote entities in network 122. One embodiment of an exemplary device 114 is further discussed below in conjunction with FIGS. 2-3. In the FIG. 1 embodiment, network 122 may be implemented to include any desired type of network of distributed remote devices (such as computers or server devices). In certain embodiments, network 122 may be implemented to include the Internet.

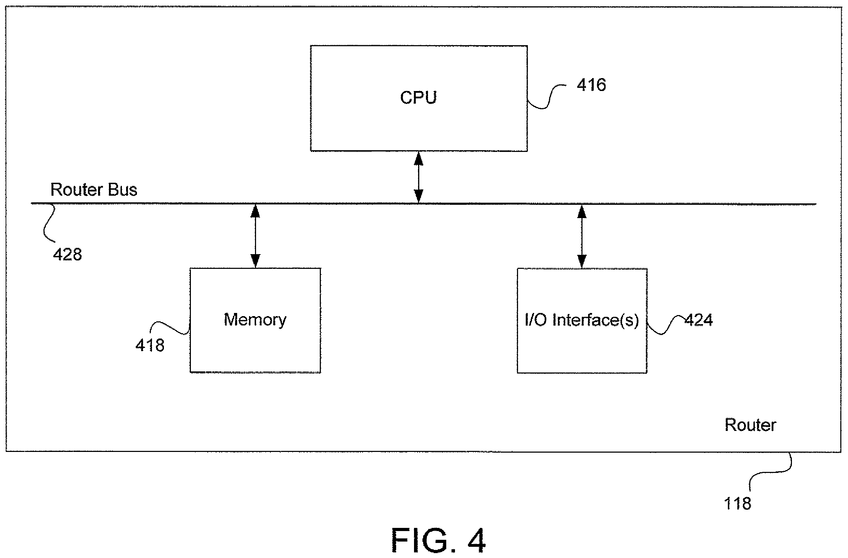

In the FIG. 1 embodiment, router 118 may be implemented as any appropriate electronic device or system that serves as an interface or a bridge between electronic devices 114 and network 122. In certain embodiments, router 118 performs certain format conversion procedures to allow a local network of electronic devices 114 to bi-directionally communicate with other external devices in network 122. One embodiment of an exemplary router 118 is further discussed below in conjunction with FIGS. 4-7.

In accordance with certain embodiments of the present invention, router 118 is implemented in an enhanced manner to provide device users of devices 114 with a more user-friendly and less burdensome experience when utilizing devices 114 to communicate through network 122. For example, when a device 114 requires access to network 122 (for example, the Internet), sometimes the device user may need to access a web administration page for a traditional router to perform various complex configuration and management procedures.

Unless the device user is knowledgeable about networking terminology and familiar with port allocation procedures, these configuration and management processes may be tedious and lengthy. Also, traditional routers are simplistic in design, with few advanced options such as proxy servers or webpage caching. The design of traditional routers is also typically a function-over-style approach, which forces some device users to hide their unsightly routers.

The present invention provides a stylish and fully-functional enhanced router 118 that automatically configures devices 114 for network communications. By adding the further ability to offer value-added services such as human-verified blacklists for a proxy server supported by the router 118, device users will be able to browse the Internet through a filtered layer, providing protection for younger users in the household. In addition, automatic configuration and management functionality may be supported through device manager software on devices 114 and complementary device support software on router 118.

The present invention therefore provides an enhanced wireless router 118 that allows specifically-identified electronic devices 114 (for example, Internet-ready televisions, desktop computers, notebook computers, and gaming devices) to be easily configured and managed, while also providing value-added services to improve the experiences of device users. The implementation and utilization of the FIG. 1 electronic network 110 are further discussed below in conjunction with FIGS. 2-7.

Referring now to FIG. 2, a block diagram for one embodiment of the FIG. 1 electronic device 114 is shown, in accordance with the present invention. In the FIG. 2 embodiment, device 114 may include, but is not limited to, a central processing unit (CPU) 216, a memory 218, a display 222, and one or more input/output interfaces (I/O interfaces) 224. Selected ones of the foregoing components of device 114 may be coupled to, and communicate through, a device bus 228.

In alternate embodiments, device 114 may be implemented using components and configurations in addition to, or instead of, certain of those components and configurations discussed in conjunction with the FIG. 2 embodiment. In addition, device 114 may be implemented as any desired type of electronic device or entity. For example, device 114 may be implemented as a personal computer device, a gaming device, a settop box, or a personal digital assistant device.

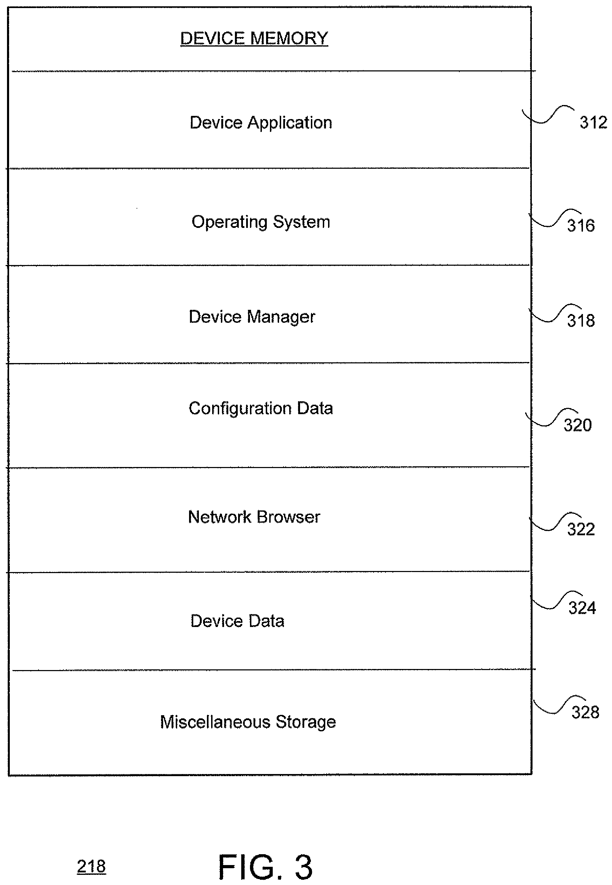

In the FIG. 2 embodiment, CPU 216 may be implemented to include any appropriate and compatible microprocessor device that preferably executes software instructions to thereby control and manage the operation of device 114. In the FIG. 2 embodiment, memory 218 may be implemented to include any combination of desired storage devices, including, but not limited to, read-only memory (ROM), random-access memory (RAM), and various types of non-volatile memory, such as floppy disks or hard disks. The contents and functionality of memory 218 are further discussed below in conjunction with FIG. 3.

In the FIG. 2 embodiment, I/O interfaces 224 may include one or more input and/or output interfaces to receive and/or transmit any required types of information for device 114. For example, in the FIG. 2 embodiment, device 114 may utilize I/O interfaces 224 to communicate with network 122 through router 118. In addition, a device user may utilize I/O interfaces 224 to communicate with device 114 by utilizing any appropriate and effective techniques. Additional details for one implementation of device 114 are further discussed below in conjunction with FIG. 3.

Referring now to FIG. 3, a block diagram for one embodiment of the FIG. 2 device memory 218 is shown, in accordance with the present invention. In the FIG. 3 embodiment, memory 218 includes, but is not limited to, application software 312, an operating system 316, a device manager 318, configuration data 320, a network browser 322, device data 324, and miscellaneous storage 328. In alternate embodiments, memory 218 may include other components and functionalities in addition to, or instead of, certain of those components and functionalities discussed in conjunction with the FIG. 3 embodiment.

In the FIG. 3 embodiment, device application 312 may include program instructions that are preferably executed by CPU 212 (FIG. 2) to perform various functions and operations for device 114. The particular nature and functionality of device application 312 typically varies depending upon factors such as the specific type and particular functionality of the corresponding device 114. In the FIG. 3 embodiment, operating system 316 controls and coordinates low-level functionality of device 114.

In the FIG. 3 embodiment, device manager 318 coordinates and manages various functions for configuring and utilizing device 114, especially with respect to communicating through router 118 (FIG. 1) with remote devices in network 122 (FIG. 1). In certain embodiments, device manager 318 may be implemented to include VAIO Care® software manufactured by Sony Corporation.

In the FIG. 3 embodiment, configuration data 320 may include, but is not limited to, any appropriate information for allowing device 114 to perform bi-directional communications with network 122 through router 118. For example, configuration data 320 may include, but is not limited to, input port configurations for device 114, output port configurations for device 114, transfer formats for communicating with network 122, transfer speeds for communicating with network 122, Internet Server Provider (ISP) information, and network browsing parameters for device 114.

In the FIG. 3 embodiment, a device user of device 114 may utilize network browser 322 to communicate with remote devices in network 122 (FIG. 1) in any effective manner. For example, network browser 322 may allow a device 122 to access and display webpages from remote computer devices in network 122. In the FIG. 3 embodiment, device data 324 may include any type of information or data that is required by device 114. In the FIG. 3 embodiment, miscellaneous storage 328 may be utilized to store any additional information or software instructions for utilization by device 114.

In the FIG. 3 embodiment, various elements and functionalities are disclosed and discussed as being implemented primarily as software. However, in alternate embodiments, some or all of the functions of the present invention may be performed by appropriate electronic hardware circuits that are configured for performing various functions that are equivalent to the respective functions of the software modules discussed herein. The configuration and management of electronic device 114 are further discussed below in conjunction with FIGS. 4 through 7.

Referring now to FIG. 4, a block diagram for one embodiment of the FIG. 1 router 118 is shown, in accordance with the present invention. In the FIG. 2 embodiment, router 118 may include, but is not limited to, a central processing unit (CPU) 416, a memory 418, and one or more input/output interfaces (I/O interfaces) 424. Selected ones of the foregoing components of router 118 may be coupled to, and communicate through, a router bus 428. In alternate embodiments, router 118 may be implemented using components and configurations in addition to, or instead of, certain of those components and configurations discussed in conjunction with the FIG. 4 embodiment.

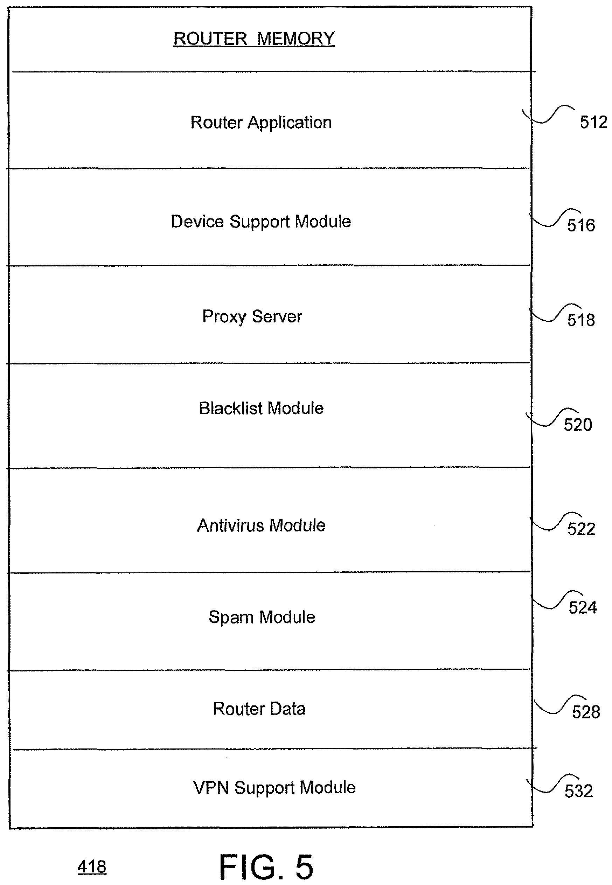

In the FIG. 4 embodiment, CPU 416 may be implemented to include any appropriate and compatible microprocessor device that preferably executes software instructions to thereby control and manage the operation of router 118. In the FIG. 4 embodiment, memory 418 may be implemented to include any combination of desired storage devices, including, but not limited to, read-only memory (ROM), random-access memory (RAM), and various types of non-volatile memory, such as floppy disks or hard disks. The contents and functionality of memory 418 are further discussed below in conjunction with FIG. 5.

In the FIG. 4 embodiment, I/O interfaces 424 may include one or more input and/or output interfaces to receive and/or transmit any required types of information for router 118. For example, in the FIG. 4 embodiment, router 118 may utilize I/O interfaces 424 to communicate with network 122 and with devices 114 by utilizing any appropriate and effective techniques.

In certain embodiments of the present invention, router 118 is advantageously implemented to include wireless/wired capability to support automatic configuration and management of devices 114 (FIG. 1), and to also provide various types of enhanced functionalities to device users. For example, with on-board non-volatile storage, router 118 is able to support proxy services as well as web-caching for the attached devices 114.

In certain embodiments, router 118 is implemented to operate in cooperation with other branded equipment from designated manufacturers with little or no configuration from the device users through an easy-to-navigate user interface. Router 118 may also offer device users protection from viruses and spam. In certain embodiments, one or more USB ports may be standard. In addition, the ability to safely tunnel through router 118 to devices 114 from any remote location may be supported using a virtual private network (VPN).

In certain embodiments, solid-state drive (SSD) storage may be utilized to store blacklists for use by a proxy server, as well as for supporting web-caching of webpages accessed by devices 114. By using device identifiers (such as media access control (MAC) addresses) that are known to belong to supported devices 114, router 118 may cooperatively help the devices 114 to automatically configure themselves with very little user intervention. Such supported devices may include, but are not limited to, televisions, notebook computers, desktop computers, or game consoles (for example, the Sony Playstation®).

The user interface for configuration and management of devices 114 may be configured to mimic other familiar software from designated manufacturers, or the user interface could be made accessible through the device manager software and complementary device support software. Router 118 may provide value-added services such as human-checked proxy blacklists, antivirus and anti-spam subscriptions to protect the entire local network of devices 114 at their perimeter.

Implementing router 118 with at least one USB port would allow for a backup of the configuration files to be safely kept at a different location. Multiple ports may allow for the expansion of router 118, such as adding an external USB hard drive, which would then become a secure Network Attached Storage device that could be used by other authorized devices. Virtual private network (VPN) capabilities may also be offered as a value-added service (for example, three free VPN connections, and more available through a subscription process).

If the USB ports are provided on router 118, a manufacturer could open router 118 to other manufacturers, allowing the other manufacturers to create USB devices that the router 118 would recognize and support accordingly. For example, a different manufacturer could create an external drive that would be supported instead of only supporting a branded drive by the original manufacturer. At the same time, the branded devices could add a secure area on the drive, for use by other branded devices to hold and/or backup configuration information or firmware updates.

In certain embodiments, router 118 may be implemented to include, at a minimum, the following hardware: One WAN Internet port with 10/100/1000 Mbps capabilities, four LAN 10/100/1000 Mbps ports for hardwired connection to devices 114, one or more USB 2.0 ports, one Wireless N transceiver, one 64GB SSD non-volatile memory, one optional eSATA port, and 64MB of RAM for the operating system. In certain embodiments, some of the software of router 18 may be implemented as a security-based Linux distribution (IPCop or similar) which allows for modifications to be easily added or made. The ability for authorized technical support to securely tunnel to device 114 (with VPN techniques) to assist device users with support questions may advantageously be supported by router 118. Additional details for one implementation of router 118 are further discussed below in conjunction with FIGS. 5-7.

Referring now to FIG. 5, a block diagram for one embodiment of the FIG. 4 router memory 418 is shown, in accordance with the present invention. In the FIG. 5 embodiment, memory 418 includes, but is not limited to, a router application 512, a device support module 516, a proxy server 518, a blacklist module 520, an antivirus module 522, a spam module 524, router data 528, and a virtual private network (VPN) support module 532. In alternate embodiments, memory 418 may include other components and functionalities in addition to, or instead of, certain of those components and functionalities discussed in conjunction with the FIG. 5 embodiment.

In the FIG. 5 embodiment, router application 512 may include program instructions that are preferably executed by CPU 412 (FIG. 4) to perform various functions and operations for router 118. The particular nature and functionality of router application 512 typically varies depending upon factors such as the specific type and particular functionality of the corresponding router 118. In the FIG. 5 embodiment, device support module 516 cooperates with device manager 318 (FIG. 3) of electronic device 114 to automatically or semiautomatically perform various functions for configuring and utilizing device 114, especially with respect to communicating through router 118 (FIG. 1) with remote devices in network 122 (FIG. 1).

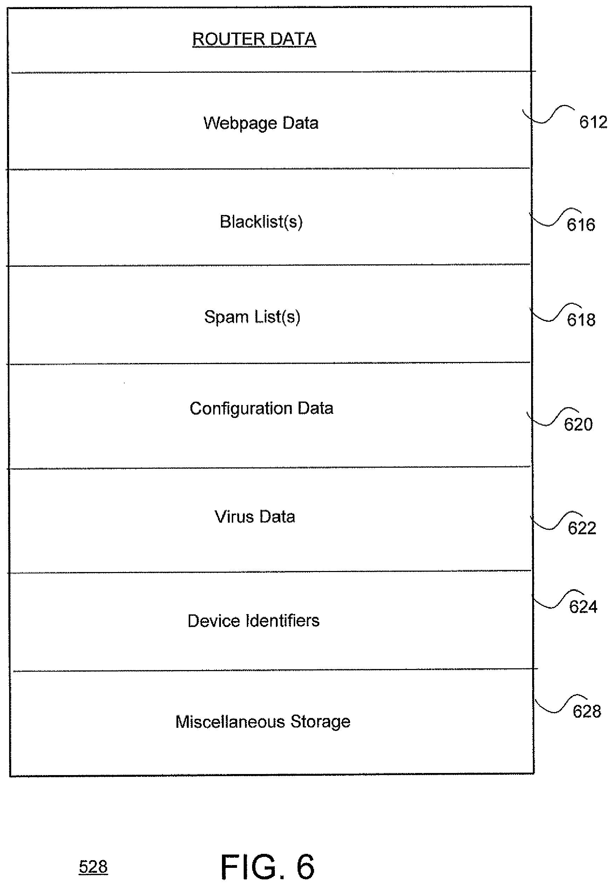

In certain embodiments, device support module 516 and device manager 318 may utilize various handshaking protocols to perform appropriate corresponding configuration procedures and management procedures. A device manager 318 of a given device 114 may provide device support module 516 with a device identifier that uniquely identifies the corresponding device 114. In addition, in certain instances, device manager 318 may also provide user input or other types of instructions. Device support module 516 may then reference a database of device identifiers (see FIG. 6) to determine a specific device manufacturer and device type for device 114.

Device support module 516 may then reference corresponding configuration data (see FIG. 6) to determine one or more appropriate default configurations and/or device management functions for the particular device 114. Device support module 516 may also take into account any user information or instructions when determining the appropriate default configurations and/or device management functions.

Device support module 516 may then automatically communicate the appropriate default configurations and/or device management functions to device manager 318. In accordance with the present invention, device manager 318 may then automatically apply the received default configurations and/or device management functions to the electronic device 114.

In the FIG. 5 embodiment, router 118 may utilize proxy server 518 to automatically capture and store webpages that are accessed by various devices 114 as webpage data (see FIG. 6). These local webpage caches corresponding to the individual devices 114 allow much more rapid access to frequently-visited websites in network 122. In the FIG. 5 embodiment, router 118 may utilize blacklist module 520 to automatically block access to any information from data sources or websites that are listed in locally-stored blacklists (see FIG. 6).

In the FIG. 5 embodiment, router 118 may utilize antivirus module 522 to automatically protect devices 114 from viruses or other threats that are listed in locally-stored virus data (see FIG. 6). In certain embodiments, antivirus module 522 may automatically provide intrusion detection notifications to devices 114 regarding any detected viruses or other threats. In the FIG. 5 embodiment, router 118 may utilize spam module 520 to automatically block reception of information or data sources that are listed in locally-stored spam lists (see FIG. 6).

In the FIG. 5 embodiment, router 118 may utilize virtual private network (VPN) support module 532 to identify and permit other external devices to securely connect to and communicate with an electronic device 114 in an encrypted manner. This "tunneling" procedure may be utilized to allow various authorized entities (such as technical support services) to safely and confidentially communicate with devices 114 in a local network that is protected by router 118.

In the FIG. 5 embodiment, various elements and functionalities are disclosed and discussed as being implemented primarily as software. However, in alternate embodiments, some or all of the functions of the present invention may be performed by appropriate electronic hardware circuits that are configured for performing various functions that are equivalent to the respective functions of the software modules discussed herein. In the FIG. 5 embodiment, router data 528 may include any appropriate type of data or information that is required for the effective performance of router 118. One exemplary embodiment showing additional details and information regarding router data 528 is further discussed below in conjunction with FIG. 6.

Referring now to FIG. 6, a block diagram of the FIG. 5 router data 528 is shown, in accordance with one embodiment of the present invention. In the FIG. 6 embodiment, router data 528 may include, but is not limited to, webpage data 612, one or more blacklists 616, one or more spam lists 618, configuration data 620, virus data 622, device identifiers 624, and miscellaneous storage 628. In alternate embodiments, router data 528 may be implemented using components and configurations in addition to, or instead of, certain of those components and configurations discussed in conjunction with the FIG. 6 embodiment.

In the FIG. 6 embodiment, webpage data 612 may include accessed webpages and other information that are automatically captured and stored by proxy server 518, as discussed above in conjunction with FIG. 5. In the FIG. 6 embodiment, blacklist(s) 616 may include one or more listings of data sources or websites that are designated to be automatically blocked by blacklist module 520. Similarly, spam lists 618 may include one or more listings of data sources, websites, or messages that are designated to be automatically blocked by spam module 524.

In the FIG. 6 embodiment, configuration data 620 may include any appropriate information for allowing device 114 to perform bi-directional communications with network 122 through router 118, as discussed above in conjunction with FIG. 5. For example, configuration data 620 may include, but is not limited to, device configuration information and device management information for specific different types of authorized and supported electronic devices 114. As also discussed above, identifying the appropriate configuration and management defaults for a given type of device 114 may be performed by referring to device identifiers 624.

In the FIG. 6 embodiment, router 118 may utilize antivirus module 522 (FIG. 5) for analyzing incoming communications in light of virus data 622 to automatically protect devices 114 from listed viruses or other threats. In the FIG. 6 embodiment, miscellaneous storage 628 may be utilized to store any additional information or software instructions for utilization by router 118.

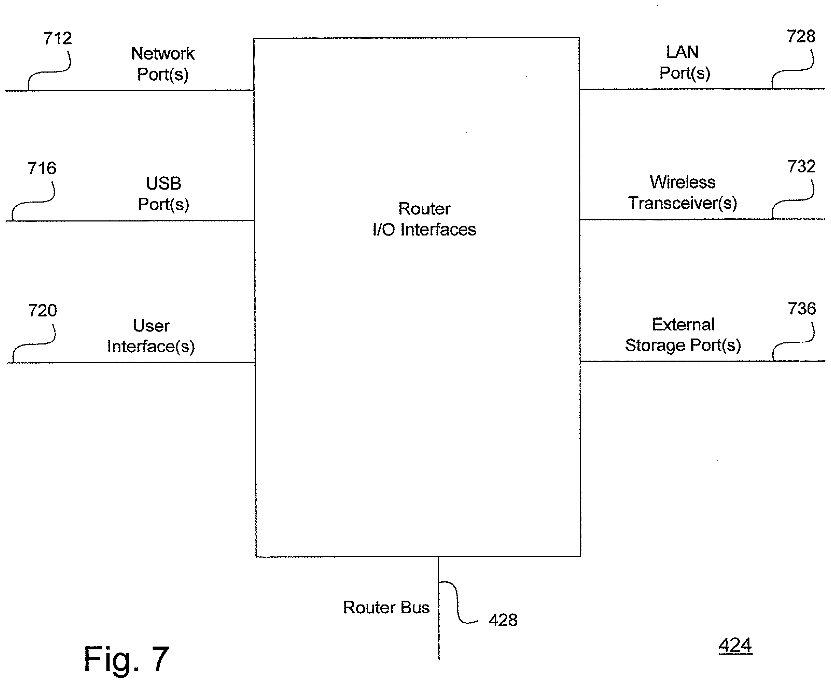

Referring now to FIG. 7, a block diagram for the FIG. 4 I/O interfaces 424 of router 118 is shown, in accordance with one embodiment of the present invention. In the FIG. 7 embodiment, I/O interfaces 424 may include, but are not limited to, network port(s) 712, USB port(s) 716, user interface(s) 720, LAN port(s) 728, wireless transceiver(s) 732, and external storage port(s) 736. In alternate embodiments, I/O interfaces 424 may be implemented using components and configurations in addition to, or instead of, certain of those components and configurations discussed in conjunction with the FIG. 7 embodiment.

In the FIG. 7 embodiment, router 118 may utilize one or more network ports 712 to perform bi-directional communications with network 122 or other external entities. Network ports 712 may be implemented in any effective manner, including, but not limited to, wide-area network (WAN) Internet ports. In the FIG. 7 embodiment, router 118 may utilize one or more universal serial bus (USB) ports 716 to perform bi-directional communications with any appropriate external entities. In alternate embodiments, other connection standards are similarly contemplated.

In the FIG. 7 embodiment, router 118 may utilize one or more user interfaces 720 that are configured to permit system users to directly perform bi-directional communications with router 118. User interfaces 720 may be implemented in any effective manner. In the FIG. 7 embodiment, router 118 may utilize one or more local area network (LAN) ports 728 to perform bi-directional communications with devices 114 (FIG. 1) or other external entities. The LAN ports 728 may be implemented in any effective manner.

In the FIG. 7 embodiment, router 118 may utilize one or more wireless transceivers 732 to perform bi-directional communications with electronic devices 118, network 122, or other external entities. The wireless transceivers 732 may be implemented in any effective manner. In the FIG. 7 embodiment, router 118 may utilize one or more external storage ports 736 to perform bi-directional communications with any types of external storage devices or other appropriate external entities. In the FIG. 7 embodiment, any effective connection standards and protocols are contemplated.

The present invention thus provides an effective system and methodology for effectively implementing an enhanced router device. The invention has been explained above with reference to certain embodiments. Other embodiments will be apparent to those skilled in the art in light of this disclosure. For example, the present invention may readily be implemented using configurations and techniques other than those described in the embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for enhancing electronic network communications, comprising:
an electronic network that is configured to include one or more distributed computer devices;
a router device (118) that is coupled to said electronic network; and an electronic device (114) configured to communicate through said router device (118) with said electronic network (122), said router device being configured to cooperate with said electronic device (114) to automatically perform a device configuration procedure, wherein the router device (118) is configured to receive a device identifier from the electronic device (114) identifying the device, to retrieve configuration information from configuration data included within router data included in a memory of the router and to send the configuration information to the electronic device (114), wherein said router device (118) includes a device support module (516), said electronic device (114) including a device manager (318), said device support module and said device manager (318) being configured to utilise an automatic handshaking technique to perform said device configuration procedure, wherein said device manager (318) is configured to provide said device support module (316) with the device identifier that uniquely identifies said electronic device (114), and wherein said device support module (316) is configured to reference a database of device identifiers (624) within the router data to determine a specific device manufacturer and device type for said electronic device, said device support module (316) being configured to then reference the configuration data corresponding to said specific device type to determine one or more default configurations and device management functions for said electronic device (114), said device support module (316) also being configured to consider any device user input instructions when determining said default configurations and said device management functions, said device support module (316) being configured to automatically communicate said default configurations and said device management functions to said device manager (318), said device manager (318) being configured to automatically apply said default configurations and device management functions to said electronic device (114).

2. The system of claim 1 wherein said electronic device (114) is alternately implemented as any of a laptop computer device, a desktop computer device, an Internet-enabled television, a personal digital assistant device, an electronic gaming device, and a consumer electronic device.

3. The system of claim 1 wherein said electronic network (122) is implemented to include an Internet network.

4. The system of claim 1 wherein said device manager is configured to further provide user input instructions to said device support module (316) regarding said electronic network communications.

5. The system of claim 1 wherein said router device (118) includes a proxy server that is configured to support a local webpage caching procedure for said electronic device, said router device also including a local non-volatile memory device that is sized to support said local webpage caching procedure for said electronic device.

6. The system of claim 1 wherein said router device (118) is configured to include a blacklist module (520) that blocks data sources that are locally identified in a blacklist that is selectively defined to protect said electronic device, said router device (118) also including an antivirus module (522) that is configured to identify threats that are locally stored in antivirus data that is selectively defined to protect said electronic device, said antivirus module providing intrusion detection notifications to said electronic device regarding said threats.

7. The system of claim 1 wherein said router device (118) includes a spam module (524) that is configured to block messages that are locally stored in a spam list that is selectively defined to shield said electronic device, said router device (118) including one or more universal serial bus (716) connections to facilitate communications with external devices that have a compatible connection format, said router device (118) also including a VPN support module (532) that is configured to identify and permit external devices to securely connect to and communicate with said electronic device (114) in an encrypted manner.

## Patentansprüche

1. System zum Verbessern einer elektronischen Netzwerkkommunikation, das Folgendes umfasst:
ein elektronisches Netzwerk, das dazu ausgelegt ist, eine oder mehrere verteilte Computervorrichtungen zu beinhalten;
eine Routervorrichtung (118), die an das elektronische Netzwerk gekoppelt ist; und
eine elektronische Vorrichtung (114), die dazu ausgelegt ist, über die Routervorrichtung (118) mit dem elektronischen Netzwerk (122) zu kommunizieren, wobei die Routervorrichtung dazu ausgelegt ist, mit der elektronischen Vorrichtung (114) zusammenzuwirken, um automatisch eine Vorrichtungsauslegungsprozedur durchzuführen, wobei die Routervorrichtung (118) dazu ausgelegt ist, von der elektronischen Vorrichtung (114) eine Vorrichtungskennung zu empfangen, die die Vorrichtung identifiziert, Auslegungsinformationen von Auslegungsdaten, die in Routerdaten beinhaltet sind, die in einem Speicher des Routers beinhaltet sind, abzurufen und die Auslegungsinformationen an die elektronische Vorrichtung (114) zu senden, wobei die Routervorrichtung (118) ein Vorrichtungsunterstützungsmodul (516) beinhaltet, wobei die elektronische Vorrichtung (114) einen Vorrichtungsverwalter (318) beinhaltet, wobei das Vorrichtungsunterstützungsmodul und der Vorrichtungsverwalter (318) dazu ausgelegt sind, eine automatische Handshaketechnik zu nutzen, um die Vorrichtungsauslegungsprozedur durchzuführen, wobei der Vorrichtungsverwalter (318) dazu ausgelegt ist, dem Vorrichtungsunterstützungsmodul (316) die Vorrichtungskennung, die die elektronische Vorrichtung (114) eindeutig identifiziert, bereitzustellen, und wobei das Vorrichtungsunterstützungsmodul (316) dazu ausgelegt ist, eine Datenbank von Vorrichtungskennungen (624) in den Routerdaten zu referenzieren, um einen spezifischen Vorrichtungshersteller und Vorrichtungstyp für die elektronische Vorrichtung zu bestimmen, wobei das Vorrichtungsunterstützungsmodul (316) dazu ausgelegt ist, dann die Auslegungsdaten, die dem spezifischen Vorrichtungstyp entsprechen, zu referenzieren, um eine oder mehrere Standardauslegungen und Vorrichtungsverwaltungsfunktionen für die elektronische Vorrichtung (114) zu bestimmen, wobei das Vorrichtungsunterstützungsmodul (316) auch dazu ausgelegt ist, etwaige Vorrichtungsbenutzereingabeanweisungen in Betracht zu ziehen, wenn es die Standardauslegungen und die Vorrichtungsverwaltungsfunktionen bestimmt, wobei das Vorrichtungsunterstützungsmodul (316) dazu ausgelegt ist, die Standardauslegungen und die Vorrichtungsverwaltungsfunktionen zum Vorrichtungsverwalter (318) zu kommunizieren, wobei der Vorrichtungsverwalter (318) dazu ausgelegt ist, die Standardauslegungen und die Vorrichtungsverwaltungsfunktionen automatisch auf die elektronische Vorrichtung (114) anzuwenden.

2. System nach Anspruch 1, wobei die elektronische Vorrichtung (114) alternierend als ein beliebiges einer Laptopcomputervorrichtung, einer Desktopcomputervorrichtung, eines internetaktivierten Fernsehgeräts, einer persönlichen digitalen Assistenzvorrichtung, einer elektronischen Spielevorrichtung und einer elektronischen Verbrauchervorrichtung implementiert wird.

3. System nach Anspruch 1, wobei das elektronische Netzwerk (122) implementiert ist, um ein Internetnetzwerk zu beinhalten.

4. System nach Anspruch 1, wobei der Vorrichtungsverwalter dazu ausgelegt ist, dem Vorrichtungsunterstützungsmodul (316) hinsichtlich der elektronischen Netzwerkkommunikation ferner Benutzereingabeanweisungen bereitzustellen.

5. System nach Anspruch 1, wobei die Routervorrichtung (118) einen Proxyserver beinhaltet, der dazu ausgelegt ist, eine lokale Webseitencachingprozedur für die elektronische Vorrichtung zu unterstützen, wobei die Routervorrichtung außerdem eine lokale nichtflüchtige Speichervorrichtung beinhaltet, die dimensioniert ist, um die lokale Webseitencachingprozedur für die elektronische Vorrichtung zu unterstützen.

6. System nach Anspruch 1, wobei die Routervorrichtung (118) dazu ausgelegt ist, ein Schwarzlistenmodul (520) zu beinhalten, das Datenquellen blockiert, die in einer Schwarzliste, die selektiv definiert ist, lokal identifiziert sind, um die elektronische Vorrichtung zu schützen, wobei die Routervorrichtung (118) außerdem ein Antivirenmodul (522) beinhaltet, das dazu ausgelegt ist, Bedrohungen zu identifizieren, die in Antivirendaten, die selektiv definiert sind, lokal gespeichert sind, um die elektronische Vorrichtung zu schützen, wobei das Antivirenmodul der elektronischen Vorrichtung hinsichtlich der Bedrohungen Eindringungsdetektionsbenachrichtigungen bereitstellt.

7. System nach Anspruch 1, wobei die Routervorrichtung (118) ein Spammodul (524) beinhaltet, das dazu ausgelegt ist, Nachrichten, die lokal in einer Spamliste gespeichert sind, die selektiv definiert ist, zu blockieren, um die elektronische Vorrichtung abzuschirmen, wobei die Routervorrichtung (118) einen oder mehrere universelle serielle Bus(716)-Verbindungen beinhaltet, um eine Kommunikation mit externen Vorrichtungen, die ein kompatibles Verbindungsformat aufweisen, zu erleichtern, wobei die Routervorrichtung (118) außerdem ein VPN-Unterstützungsmodul (532) beinhaltet, das dazu ausgelegt ist, externe Vorrichtungen zu identifizieren und es diesen zu erlauben, sich mit der elektronischen Vorrichtung (114) in einer verschlüsselten Weise sicher zu verbinden und mit dieser zu kommunizieren.

## Revendications

1. Système pour améliorer les communications de réseau électronique, comprenant :
un réseau électronique qui est configuré pour inclure un ou plusieurs dispositifs informatiques distribués ;
un dispositif de routeur (118) qui est couplé audit réseau électronique ; et
un dispositif électronique (114) configuré pour communiquer par l'intermédiaire dudit dispositif de routeur (118) avec ledit réseau électronique (122), ledit dispositif de routeur étant configuré pour coopérer avec ledit dispositif électronique (114) pour exécuter automatiquement une procédure de configuration de dispositif, où le dispositif de routeur (118) est configuré pour recevoir un identificateur de dispositif du dispositif électronique (114) identifiant le dispositif, pour récupérer des informations de configuration à partir de données de configuration incluses dans les données de routeur incluses dans une mémoire du routeur et pour envoyer les informations de configuration au dispositif électronique (114), où ledit dispositif routeur (118) comprend un module de support de dispositif (516), ledit dispositif électronique (114) comprenant un gestionnaire de dispositif (318), ledit module de support de dispositif et ledit gestionnaire de dispositif (318) étant configurés pour utiliser une technique de prise de contact automatique pour exécuter ladite procédure de configuration de dispositif, où ledit gestionnaire de dispositif (318) est configuré pour fournir audit module de support de dispositif (316) l'identificateur de dispositif qui identifie de manière unique ledit dispositif électronique (114), et où ledit module de support de dispositif (316) est configuré pour référencer une base de données d'identificateurs de dispositifs (624) dans les données de routeur pour déterminer un fabricant de dispositif spécifique et un type de dispositif pour ledit dispositif électronique, ledit module de support de dispositif (316) étant configuré pour ensuite référencer les données de configuration correspondant audit type de dispositif spécifique pour déterminer une ou plusieurs configurations par défaut et des fonctions de gestion de dispositif pour ledit dispositif électronique (114), ledit module de support de dispositif (316) étant également configuré pour considérer toutes les instructions d'entrée d'utilisateur, quelles qu'elles soient, lors de la détermination desdites configurations par défaut et desdites fonctions de gestion de dispositif, ledit module de support de dispositif (316) étant configuré pour communiquer automatiquement lesdites configurations par défaut et lesdites fonctions de gestion de dispositif audit gestionnaire de dispositif (318), ledit gestionnaire de dispositif (318) étant configuré pour appliquer automatiquement lesdites configurations par défaut et les fonctions de gestion de dispositif audit dispositif électronique (114).

2. Système selon la revendication 1, dans lequel ledit dispositif électronique (114) est mis en oeuvre de manière alternative sous la forme d'un dispositif quelconque parmi un ordinateur portable, un ordinateur de bureau, un téléviseur compatible avec Internet, un assistant numérique personnel, une console de jeu électronique et un dispositif électronique grand public.

3. Système selon la revendication 1, dans lequel ledit réseau électronique (122) est mis en oeuvre pour inclure un réseau Internet.

4. Système selon la revendication 1, dans lequel ledit gestionnaire de dispositif est configuré pour fournir en outre des instructions d'entrée d'utilisateur audit module de support de dispositif (316) concernant lesdites communications de réseau électronique.

5. Système selon la revendication 1, dans lequel ledit dispositif routeur (118) comprend un serveur mandataire qui est configuré pour supporter une procédure de mise en cache de page Web locale pour ledit dispositif électronique, ledit dispositif routeur comprenant également un dispositif de mémoire locale non volatile qui est dimensionné pour supporter ladite procédure de mise en cache de page Web locale pour ledit dispositif électronique.

6. Système selon la revendication 1, dans lequel ledit dispositif routeur (118) est configuré pour inclure un module de liste noire (520) qui bloque les sources de données qui sont identifiées localement dans une liste noire qui est définie de manière sélective pour protéger ledit dispositif électronique, ledit dispositif routeur (118) comprenant également un module antivirus (522) qui est configuré pour identifier les menaces qui sont stockées localement dans des données antivirus qui sont définies de manière sélective pour protéger ledit dispositif électronique, ledit module antivirus fournissant des notifications de détection d'intrusion audit dispositif électronique concernant lesdites menaces.

7. Système selon la revendication 1, dans lequel ledit dispositif routeur (118) comprend un module anti-pourriel (524) qui est configuré pour bloquer les messages qui sont stockés localement dans une liste de pourriels qui est définie de manière sélective pour protéger ledit dispositif électronique, ledit dispositif routeur (118) comprenant une ou plusieurs connexions de bus série universel (716) pour faciliter les communications avec des dispositifs externes qui ont un format de connexion compatible, ledit dispositif routeur (118) comprenant également un module de support VPN (532) qui est configuré pour identifier et permettre à des dispositifs externes de se connecter et de communiquer de manière sécurisée avec ledit dispositif électronique (114) d'une manière cryptée.
